# EUROPEAN PATENT APPLICATION

(11) **EP 1 482 505 A1**
(43) Date of publication of application: **01.12.2004**
(21) Application number: 04011654.3
(22) Date of filing: 17.05.2004
(51) Int. Cl.: G11B 23/03, G11B 17/04

(54) **Disk cartidge and a disk drive for use with same**

(30) Priority: 31.05.2003 KR 2003035033
(71) Applicant: Daewoo Electronics Corporation, Seoul (KR)
(72) Inventor: Park, Joo-Youn, Mapo-gu Seoul (KR)
(74) Representative: Turi, Michael, Dipl.-Phys.

(57) **Abstract**

A disk cartridge of the present invention includes a cartridge shell for enclosing a rotatable disk, which has a top wall on which an access window is formed; a shutter member for closing and opening the access window, which is slidably coupled with the cartridge shell; and a shutter lock device. The shutter lock device selectively locks the shutter member in a closed position where the shutter member closes the access window.

## Description

The present invention relates to a disk cartridge, such as a holographic disk cartridge, and a disk drive for use with same; and more particularly, to a holographic disk cartridge which is capable of preventing an accidental opening of a cartridge shell thereof and thus, unintentional or accidental exposure of a disk enclosed therein to light from the sun and/or an illumination apparatus, and a holographic disk drive which is capable of cooperating with the holographic disk cartridge.

A holographic digital data storage system, an information storage device using a photorefractive material as a storage medium, has recently become more commercially available to the public as technologies of semiconductor lasers, charge coupled devices (CCDs), liquid crystal displays (LCDs) and the like are rapidly developed. The holographic digital data storage system normally features a larger storage capacity and higher data transfer rate when compared with traditional storage devices. Thus, it has already been applied to, e.g., fingerprint recognition systems for storing and reproducing information on fingerprints, and the application fields thereof are gradually increasing.

Such a holographic digital data storage system allows hundreds to thousands of holograms containing information of binary digital data on a page-by-page basis to be stored in a single space of a storage medium by means of angular, wave length, phase-coded, shift or spatial multiplexing, or hybrid multiplexing schemes combining two or more aforementioned multiplexing methods, and retrieves the recorded information therefrom. The storage medium used in the holographic digital data storage system is enclosed in a holographic disk cartridge which is light impermeable and removable from the holographic digital data storage system. Thus, the storage medium can be loaded in or unloaded from a disk drive device of the holographic digital data storage system according to the necessity.

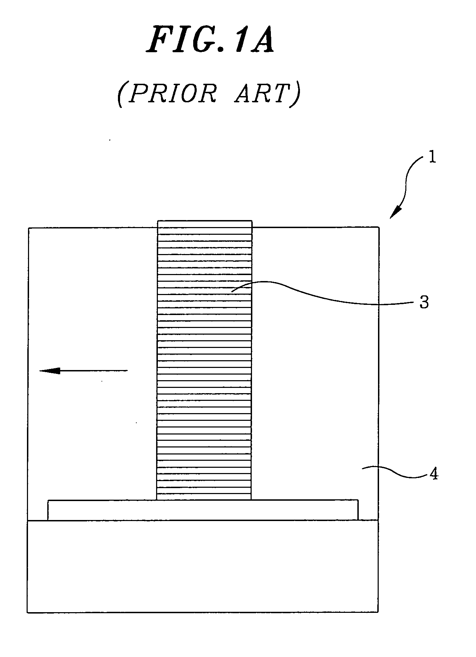

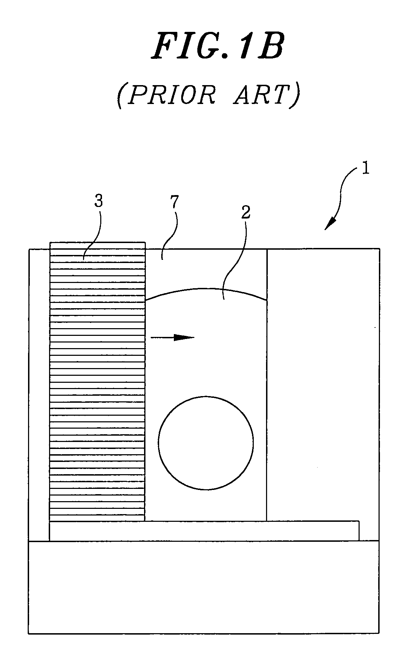

Referring to Figs. 1A and 1B, there are illustrated top views of a conventional removable disk cartridge with its sliding shutter closed and opened, respectively. As shown in Figs. 1A and 1B, the holographic disk cartridge 1 includes a cartridge shell 4, which encloses a disk 2 rotatably installed therein, the storage medium made of the photorefractive material. In the cartridge shell 4, one or two elongated access windows 7 (two in this conventional holographic disk cartridge) for providing access to the disk 2 by a pickup unit and a drive spindle of a holographic disk drive are formed. And a shutter 3 for closing and opening the access windows 7 is slidably coupled with a top and a bottom wall of the cartridge shell 4.

However, in such a conventional holographic disk cartridge, the sliding shutter 3 can be unintentionally slid to open the access windows 7, for example, owing to user's carelessness, when the holographic disk cartridge is outside the disk drive. Thus, the disk 2 can be exposed or subjected to light from the sun or an illuminating appliance. In such a case, since the disk 2 is formed of the photorefractive material, it is transformed or denaturalized, resulting in decrease in a quality of reconstructed signals.

It is, therefore, an object of the present invention to provide a holographic disk cartridge including a shutter lock mechanism for preventing a sliding shutter from being accidentally opened, thereby avoiding transformation or denaturalization of a photosensitive material of a disk, and a holographic disk drive for use with same.

In accordance with the present invention, there is provided a disk cartridge including: a cartridge shell for enclosing a rotatable disk, the cartridge shell having a top wall on which an access window is formed; a shutter member for closing and opening the access window, the shutter member slidably coupled with the cartridge shell; and a shutter lock device for selectively locking the shutter member in a closed position where the shutter closes the access window.

The above and other objects and features of the present invention will become apparent from the following description of preferred embodiments given in conjunction with the accompanying drawings, in which:
Fig. 1A illustrates a top view of a conventional removable holographic disk cartridge with its sliding shutter closed;
Fig. 1B illustrates a top view of a conventional removable holographic disk cartridge with its sliding shutter open;
Fig. 2 presents a top view of a holographic disk cartridge in accordance with a preferred embodiment of the present invention;
Fig. 3 depicts a cross sectional view of the holographic disk cartridge in accordance with the preferred embodiment of the present invention;
Fig. 4 offers a cross sectional view of the holographic disk cartridge loaded in a disk drive; and
Fig. 5 sets forth a cross sectional view of the holographic disk cartridge loaded in a disk drive.

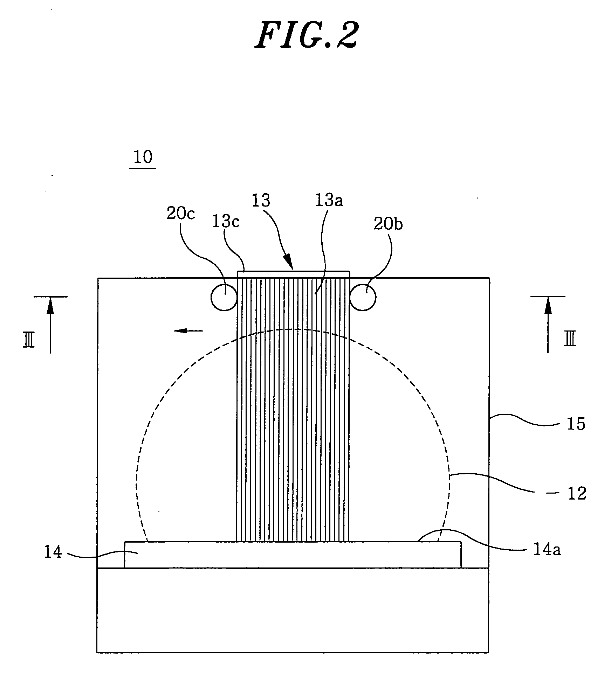

Preferred embodiments of the present invention will now be described in detail with reference to the accompanying drawings, wherein like parts appearing in Figs. 2 to 5 are represented by like reference numerals.

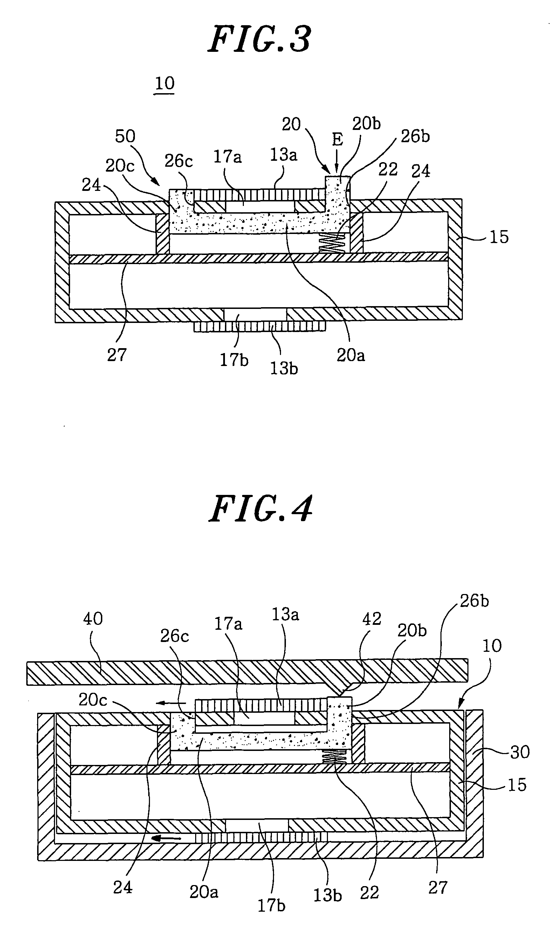

Fig. 2 illustrates a top view of a holographic disk cartridge with its sliding shutter closed. And Fig. 3 presents a cross sectional view taken along the line III-III of Fig. 2.

As shown in Figs. 2 and 3, the holographic disk cartridge 10 includes a cartridge shell 15 for rotatably enclosing a disk 12 as a storage medium formed of a photorefractive material, therein. The cartridge shell 15 has a top wall and a bottom wall which are provided with a top and a bottom access window 17a and 17b respectively for providing access to the disk 12 by a pickup unit and a drive spindle of a disk drive incorporated in a holographic digital data storage system. Slidably coupled on the top and the bottom wall of the cartridge shell 15 is a sliding shutter 13 for opening and closing the top and the bottom access window 17a and 17b simultaneously. The holographic disk cartridge 10 also includes a shutter lock device 50 for locking the sliding shutter 13 in a closed position when the disk cartridge 10 is not loaded in the disk drive 15. The shutter lock device 50 is installed in the cartridge shell.

The top and the bottom access window 17a and 17b are openings formed in the top and the bottom wall, respectively, in such a manner that they can expose a hub (not shown) and a portion of a data storage area of the disk 12.

The sliding shutter 13 has a top shutter member 13a for closing and opening the top access window 17a, a bottom shutter member 13b for closing and opening the bottom access window 17b, and a connection portion 13c for connecting outer end portions of the top and the bottom shutter member 13a and 13b. Since the top and the bottom shutter member 13a and 13b are connected by the connection portion 13c, the sliding shutter 13 can close and open the top and the bottom access window 17a and 17b simultaneously.

A pair of guide portions 14 are provided on the top and the bottom wall of the cartridge shell 15, respectively. The guide portions 14 guide inner end portions of the top and the bottom shutter member 13a and 13b so that the top and the bottom shutter member 13a and 13b can be slid horizontally along guide surfaces 14a thereof on the top and the bottom wall of the cartridge shell 15.

Further, in the guide portion 14, an elastic member (not shown), such as a spring, is provided, which biases the sliding shutter 13 toward its closed position where it closes the top and the bottom access window 17a and 17b.

The shutter lock device 50 includes a u-shaped catch 20 which moves between a lock position where it prevents the sliding shutter 13 from sliding and a release position where it allows the sliding shutter 13 to slide; an elastic member 22, such as a coil spring, which pushes the catch 20 to be located at the lock position when the disk cartridge 10 is not loaded in the disk drive; and a base wall 27 for supporting a bottom portion of the elastic member 22, which is disposed substantially parallel to the top wall and firmly fixed to both side walls of the cartridge shell 15.

The catch 20 has a stopper portion 20c, which is snugly and movably fitted in a first through-hole 26c formed in the top wall of the cartridge shell 15; a button portion 20b, which is also snugly and movably fitted in a second through-hole 26b formed in the top wall of the cartridge shell 15 at opposite side of the first through-hole with respect to the top access window 17a; and a bridging portion 20a connecting lower end portions of the stopper portion 20c and the button portion 20b in the cartridge shell 15. The first and the second through-hole 26c and 26b are formed just beside the sliding shutter 13 at the closed position such that the stopper portion 20c and the button portion 20b protruding therethrough abut against opposite sides of the sliding shutter 13 to prevent the sliding shutter 13 from sliding. On the other hand, in case where the catch 20 is pressed down to the release position, an upper end of the stopper portion 20c comes to be located below a bottom surface of the top shutter member 13a. At this time, the button portion 20b is still protruded through the second through-hole 26b since the button portion 20b is preferably longer than the stopper portion 20c.

Further, the elastic member 22 exerts an elastic force on the bottom of the catch 20 such that the catch 20 is pushed up against a lower surface of the top wall to be in the lock position. When a downward exterior force E is applied to the button portion 20b, the catch 20 is moved down to the release position compressing the elastic member 22. Further, the elastic member 22 is preferably disposed between the catch 20 and the base wall 27 under the button portion 20b so that a rotation of the catch 20 can be prevented when the button portion 20b is pushed down.

Further, a pair of guide walls 24 are vertically extended between the top wall and the base wall 27 to guide movements of the catch 20 between the lock position and the release position. The guide walls 24 also serves to support the top wall. Thus, the top wall can withstand a downward exterior force avoiding a physical damage owing to a contact between the top wall and the disk 12.

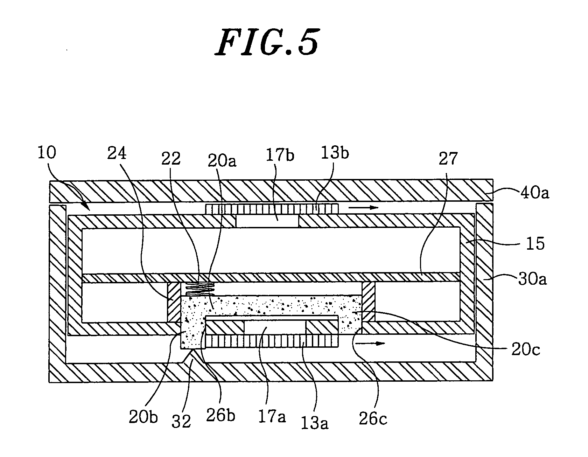

Referring to Figs. 4 and 5, there are illustrated cross sectional views of the disk cartridge of the present invention loaded in structurally different trays of disk drives, respectively. As shown in Figs. 4 and 5, the disk drives have projecting parts 42 and 32 respectively, which push the button portion 20b inwardly when the disk cartridge 10 is loaded therein.

When the button portion 20b is pushed inwardly to an appropriate depth by the projecting part 42 or 32 compressing the elastic member 22, the stopper portion 20c is also moved inwardly, so that the upper end of the stopper portion 20c is located below the bottom surface of the top shutter member 13a, i.e., the catch 20 is located at the release position. Meanwhile, the button portion 20b, which is longer than the stopper portion 20c, is still protruded from the top wall even when the catch 20 is at the release position. Thus, the sliding shutter 13 can be slid in only one direction indicated by an arrow to be at its open position. Then, the sliding shutter 13 is slid in the direction of the arrow by a shutter opener (not shown) of the disk drive to be at the open position. Next, the drive spindle engages with the hub of the disk 12 and the pickup unit is positioned near the data storage area of the disk 12 exposed through the top and the bottom access window 17a and 17b for a reading or a writing operation. The sliding shutter is retained at the open position by the shutter opener during the writing or the reading operation.

Before the disk cartridge 10 is unloaded from the disk drive, the shutter opener releases the sliding shutter 13 so that the sliding shutter 13 is returned to the closed position by a restoring force of the elastic member in the guide portion 14. At this time, since the button portion 20b is still protruded from the top wall, the sliding shutter 13 stops at the closed position. Then, by retracting a top cover 40 of the disk drive or unloading the disk cartridge 10 from the tray 30a, the button portion 20b is released from the projecting part 42 or 32. As soon as the button portion 20b is released, the catch 20 is returned to the lock position by a restoring force of the elastic member 22.

As described above, the sliding shutter 13 at the closed position cannot be slid unless the upper end of the stopper portion 20c is located below the bottom surface of the top shutter member 13a. Accordingly, when the disk cartridge 10 is unloaded from the disk drive or located at outside thereof, an unintentional or accidental opening of the sliding shutter 13 and hence an accidental exposure of the disk 12 to light from the sun or the illuminating appliance can be positively prevented.

Further, in the above-described top cover 40 of the disk drive, it is preferable that the projecting part 42 has an inclined surface which contacts with the button portion 20b when the top cover 40 moves horizontally to cover the tray 30. Thus, the button portion 20b can be pushed only by a horizontal movement of the top cover 40 without a vertical movement thereof.

Further, the tray 30a has on an inner surface of a bottom plate thereof the projecting part 32 which pushes the button portion 20b when the disk cartridge 10 is loaded upside down in the tray 30a. A top cover 40a is provided to cover the tray 30a holding the disk cartridge 10.

Although the embodiments of the holographic disk cartridge and the holographic disk drive have been described above, it should be noted that the present invention may be applied to any kind of disk cartridge requiring the prevention of an accidental opening of the disk cartridge and any kind of disk drive cooperating with the same.

In accordance with the present invention, it is possible to avoid an accidental opening of the disk cartridge which may cause an unintentional exposure of the disk formed of a photosensitive material to light. Therefore, the denaturalization of the disk due to the light-exposure is prevented.

While the invention has been shown and described with respect to the preferred embodiments, it will be understood by those skilled in the art that various changes and modifications may be made without departing from the scope of the invention as defined in the following claims.

## Claims

1. A disk cartridge comprising:
a cartridge shell for enclosing a rotatable disk, the cartridge shell having a top wall on which an access window is formed;
a shutter member for closing and opening the access window, the shutter member slidably coupled with the cartridge shell; and
a shutter lock device for selectively locking the shutter member in a closed position where the shutter member closes the access window.

2. The disk cartridge of claim 1, wherein the shutter lock device includes a catch which is movable between a lock position where the catch prevents the shutter member from sliding and a release position where the catch allows the shutter member to slide; an elastic member which pushes the catch to be located at the lock position; and a base wall for supporting a bottom portion of the elastic member, which is fixed in the cartridge shell.

3. The disk cartridge of claim 2, wherein the catch has a stopper portion, which is movably inserted in a fist through-hole formed in the top wall; a button portion, which is also movably inserted in a second through-hole formed in the top wall; and a bridging portion connecting lower end portions of the stopper portion and the button portion in the cartridge shell.

4. The disk cartridge of claim 3, wherein the first and second through-hole are formed just beside the sliding shutter in the closed position.

5. The disk cartridge of claim 4, wherein the stopper portion and the button portion are protruded from the top wall when the catch is in the lock position.

6. The disk cartridge of claim 5, wherein an upper end portion of the stopper portion is below an upper surface of the top wall when the catch is in the release position.

7. The disk cartridge of claim 6, wherein the button portion is longer than the stopper portion.

8. The disk cartridge of claim 7, wherein an upper end portion of the button portion is protruded from the top surface when the catch is in the release position.

9. The disk cartridge of claim 8, wherein the shutter lock device further includes a pair of guide walls which are disposed between the top wall and the base wall and which guide a vertical movement of the catch between the lock position and the release position.

10. The disk cartridge of claim 9, wherein the disk is formed of a photorefractive material.

11. The disk cartridge of claim 10, wherein the access window exposes a portion of a data storage area of the disk.

12. The disk cartridge of claim 11, wherein the cartridge shell has a bottom wall in which another access window is formed, and another shutter member closes and opens said another access window.

13. A disk drive for use with the disk cartridge of claim 1, comprising:
a tray for accommodating the disk cartridge; and
a top cover for covering the tray, the top cover having a projecting part for pushing the button portion.

14. The disk drive of claim 13, wherein the projecting part has an inclined surface.

15. A disk drive for use with the disk cartridge of claim 1, comprising:
a tray for accommodating the disk cartridge, the tray having on a bottom plate a protrusion for pushing the button portion.

16. The disk drive of claim 15, further comprising a top cover for covering the tray.

17. The disk drive of claim 16, wherein the disk cartridge is loaded in the tray upside down.
